# EUROPEAN PATENT APPLICATION

(11) **EP 4 707 814 A1**
(43) Date of publication of application: **11.03.2026**
(21) Application number: 25200610.1
(22) Date of filing: 05.09.2025
(51) Int. Cl.: G01N 35/04

(54) **CONVEYOR**

(30) Priority: 09.09.2024 JP 2024154892
(71) Applicant: Aoi Seiki Co., Ltd., Kumamoto-shi, Kumamoto-ken 861-8038 (JP)
(72) Inventor: ITOH, Teruaki, Kumamoto-ken, 861-8038 (JP)
(74) Representative: AWA Sweden AB

(57) **Abstract**

According to an aspect of the present invention, a conveyor is configured so that a plurality of holders are arranged, the holders each being configured to hold a specimen container in an upright state and includes a first magnet, the conveyor including an advancing member including a second magnet and configured to move along a conveyance path, the first magnet and the second magnet being adapted to produce an attractive force therebetween.

## Description

### FIELD

The present invention relates to a conveyor for specimen containers.

### BACKGROUND

A conveyor by which specimen containers such as blood collecting tubes capable of containing specimens, e.g., blood, are moved through a predetermined conveyance route is known. As the conveyor, for example, a conveyor mechanism which places a holder uprightly holding a specimen container on a belt and advances the belt so as to convey the specimen container is known.

Also, for such a conveyor mechanism, consideration has been given of a configuration in which a built-in magnet is furnished on the holder side and a metal member is furnished on the belt side so that conveyance is realized by utilizing the magnetic force of the magnet while the holder and the belt are kept contactless with each other (see Jpn. Pat. Appln. KOKAI Publication No. 2017-120206).

In the configuration which provides a holder with a magnet as mentioned above, the available magnetic force is limited by the size of the magnet that can be mounted on the holder, and as such, the conveyance force could be limited.

There is therefore a demand for a conveyor with improved conveyance force.

According to the embodiments, a conveyor with improved conveyance force can be provided.

### SUMMARY

According to an aspect of the present invention, a conveyor is configured so that a plurality of holders are arranged, the holders each being configured to hold a specimen container in an upright state and includes a first magnet, the conveyor including an advancing member including a second magnet and configured to move along a conveyance path, the first magnet and the second magnet being adapted to produce an attractive force therebetween.

### BRIEF DESCRIPTION OF THE DRAWINGS

FIG. 1 is a diagram for illustrating a specimen processing apparatus according to a first embodiment of the invention.
FIG. 2 is a perspective view of a conveyor of the specimen processing apparatus.
FIG. 3 is a perspective view of the conveyor of the specimen processing apparatus.
FIG. 4 is a sectional view of the conveyor.
FIG. 5 is sectional views of the conveyor.
FIG. 6 is a sectional view of a conveyor according to another embodiment of the invention.
FIG. 7 is a perspective view of a part of a configuration of the conveyor.
FIG. 8 is a perspective view of a part of the configuration of the conveyor.

### DETAILED DESCRIPTION

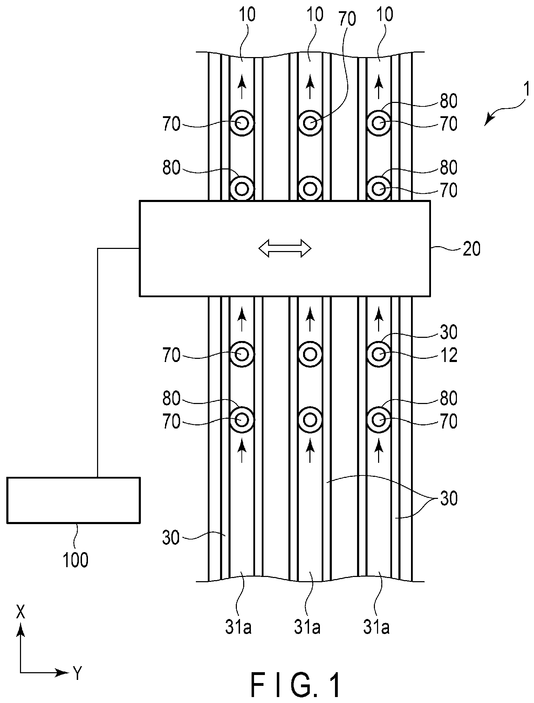

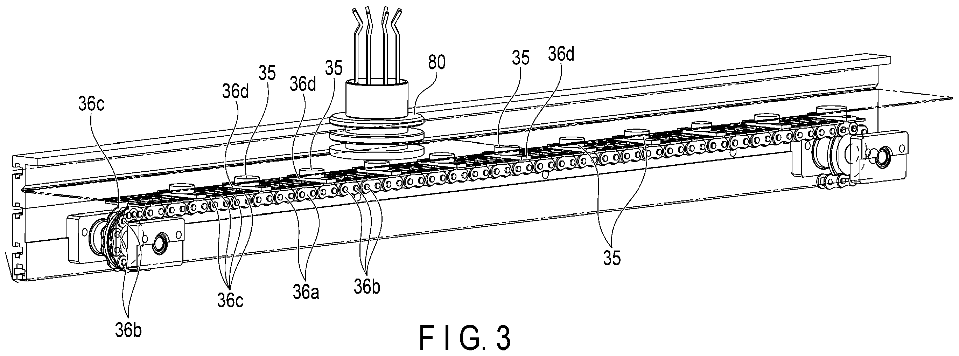

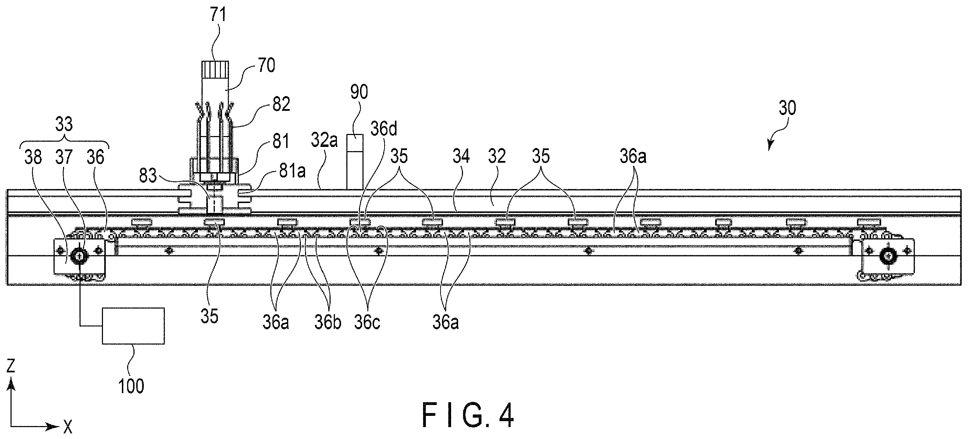

A conveyor according to an embodiment of the invention will be described with reference to FIGS. 1 to 5. In the figures, X, Y, and Z represent three directions orthogonal to one another. An exemplary arrangement will be shown with the X axis assumed to be a conveyance direction of a conveyance route, the Y axis assumed to be a width direction of the conveyance route, and the Z axis assumed to conform to the vertical direction. Note that, for the sake of explanation, the figures may each show the components in an enlarged size or a reduced size as appropriate, or may omit the components as appropriate.

As shown in FIG. 1, the specimen processing apparatus 1 includes a plurality of conveyors 10, a processing member 20, and a controller 100. As one example, each conveyor 10 is a device for moving, along a predetermined conveyance route, a specimen holder 80 which holds a specimen container 70 containing a specimen, under the control of the controller 100.

In one example, the conveyor 10 includes a plurality of conveyor mechanisms 30 provided with a member b at a predetermined location thereof.

The conveyor 10 may be disposed as a part of the processing apparatus for conducting various processes such as an analysis process. In one example, the conveyor 10 is arranged continuously with a conveyance path or a processing member of another processing apparatus and has a compatible configuration. For example, the conveyor 10 and a processing apparatus that includes a conveyance path having a common configuration or a compatible configuration with a conveyance path 31a set at the upper portion of the conveyor 10 may be used as a unit by coupling together their respective conveyance paths.

By way of example, the description will assume that the conveyor mechanisms 30 have a posture in which the conveyance direction of each of their conveyance routes extends along a first direction, their parallel arrangement direction extends along a second direction crossing the first direction, and their height direction extends along a third direction crossing the first direction and the second direction.

The specimen containers 70, which are subjects of conveyance processes, may each be, for example, a blood collecting tube formed of a transparent glass tube or the like and may each have a cylindrical shape with a columnar inner space for accommodating a specimen such as blood serum and an upper opening. The upper opening is provided with a cap member 71. In one example, a label is affixed to an outer circumferential side surface of the specimen container 70 by a bond or an adhesive. The label shows a name, ward, or various numbers to indicate the attribution of the specimen, or a barcode serving as an information display portion to indicate a variety of information including identification information.

The specimen holders 80 each include a holding cylinder part 81 (cylinder part) having a bottomed cylindrical shape with an accommodating hole for accommodating a bottom portion of the specimen container 70, a plurality of holding pins 82 extending upwardly from the holding cylinder part 81, and a holder magnet 83 as a first magnet. The holding cylinder part 81 has a level difference 81a such as an annular engagement groove in the outer peripheral surface. With this level difference 81a engaged with a projection 32a formed at the inner wall of a guide rail 32 of each conveyor mechanism 30, the specimen holder 80 is arranged above a conveyor cover 34 via a slight gap G so that the conveyance direction and the position of the specimen holder 80 will be guided by the guide rail 32. Note that, as the materials of the specimen holder 80, a resin part is constituted by POM and a metal part is constituted by SUS303 and/or 304.

The holding pins 82 are, for example, metal pin members, which are partially bent in such a form as to project inwardly in the radial direction of the specimen holder 80. The holding pins 82 are elastically deformable. The specimen holder 80 presses, via the bent portions of the holding pins 82, the outer peripheral surface of the specimen container 70 inserted into the holding cylinder part 81 so as to hold the specimen container 70 in an upright orientation with the opening and the cap member 71 facing upward. The specimen holder 80 holding the specimen container 70 is supported in an upright state while being fit between the pair of guide rails 32, and is conveyed according to the movement of a chain belt 36.

The holder magnet 83 is, in one example, a permanent magnet. For example, the holder magnet 83 is formed in a shape of a circular column. The holder magnet 83 is disposed within the bottom portion of the holding cylinder part 81. In one example, the holder magnet 83 is constituted to have such a polarity as to entail a mutually attractive force between the holder magnet 83 and a conveyor magnet 35. The specimen holder 80 is pulled and moved in the conveyance direction according to the movement of the chain belt 36, while being secured directly above the conveyor magnet 35 due to the attractive force between the holder magnet 83 and the conveyor magnet 35.

The holder magnet 83 and the conveyor magnet 35 are each formed in a shape of a circular column so that the attractive force is uniformly applied irrespective of the state of rotational movement, etc. of the holder 80. Also, the magnetic force is controlled using thicknesses of the magnets so as to be set to a size for keeping a suitable balance, so that instantaneous shifting due to an abrupt attraction is avoided.

Note that the specimen holder 80 includes a built-in RFID tag having unique number information associated with a specimen ID. In one example, in the specimen holder 80 which is a processing target of the conveyor 10, the specimen ID and the information on the RFID tag in the specimen holder 80 are associated with each other in advance.

The conveyor 10 includes more than one conveyor mechanism 30. Each conveyor mechanism 30 forms a respective conveyance path 31a along the first direction and conveys the specimen holders 80 holding the specimen containers 70 through the predetermined conveyance path 31a.

The conveyor mechanism 30 includes a pair of guide rails 32, an advancing member 33 disposed between the guide rails 32, a cover 34, the conveyor magnets 35, and a stop arm 90.

The guide rails 32 that form a pair are disposed at a constant width along the conveyance route extending in the X axis direction in the drawings. The guide rails 32 are made of a material, for example, aluminum (white anodized), for which compatibility with the material of the specimen holders 80 is taken into consideration.

Each guide rail 32 has the rail projection 32a for engagement with the groove in the outer surface (outer peripheral portion) of the holder 80. The guide rails 32, which form a pair, are disposed on the respective sides of the specimen holder 80 so as to guide the specimen holder 80 in the conveyance direction while preventing a fall or a drop of the specimen holder 80. In one example, a width dimension between the rail projections 32a of the opposing members that form a pair is arranged to be smaller than the outer width of the specimen holder 80 and slightly larger than the inner width dimension at the level difference 81a serving as the engagement groove.

In the pair of guide rails 32, the inwardly projecting rail projections 32a are formed at the upper end portions of the respective guide rails 32, and these rail projections 32a at the upper end portions engage with the level difference 81a, which is an annular engagement groove or the like formed in the outer peripheral surface of the holding cylinder part 81.

The advancing member 33 is, for example, a belt member or a chain member. In the present embodiment, the advancing member 33 includes a chain belt 36, an advancing roller 37, which is a belt advancing mechanism meshed with the chain belt 36, and a drive source 38 (driver) such as a motor for rotating the advancing roller 37 to move the chain belt 36. The chain belt 36 has a loop shape put on the circulating route including an outbound path and a return path along the conveyance direction.

In one example, the chain belt 36 is an endless member moving along the looped cyclic route including an outbound path and a return path along the conveyance direction. The chain belt 36 is provided over the looped cyclic route, which is constituted by the outbound and return paths extending in the front and back directions, and arc connection paths connecting together the outbound and return paths at the respective frond and back end locations.

The chain belt 36 is formed of a plurality of link pieces 36a rotatably coupled together via pins 36b. For example, the link piece 36a has holes in both ends for the insertion of the pin 36b having a shaft extending in the width direction.

Each link piece 36a integrally has a pair of supports 36c provided outside the loop of the chain belt 36 and extending outwardly in the width direction. Each pair of supports 36c forms a support surface along the conveyance direction and the width direction orthogonal to the conveyance direction. As such, the chain belt 36 is provided with multiple pairs of supports 36c forming the surfaces along the circulating route and the width direction and arranged in parallel with each other at predetermined pitches.

A fixation plate 36d is provided over the pair of supports 36c of each link piece 36a. The fixation plate 36d is formed in a rectangular plate shape which is longer in the width direction of the conveyance path. The conveyor magnet 35 having a disk shape is attached to the central part of the fixation plate 36d on the front side.

In one example, the conveyor magnets 35 are attached to some of the fixation plates 36d arranged at equal intervals among the sequentially arranged multiple fixation plates 36d.

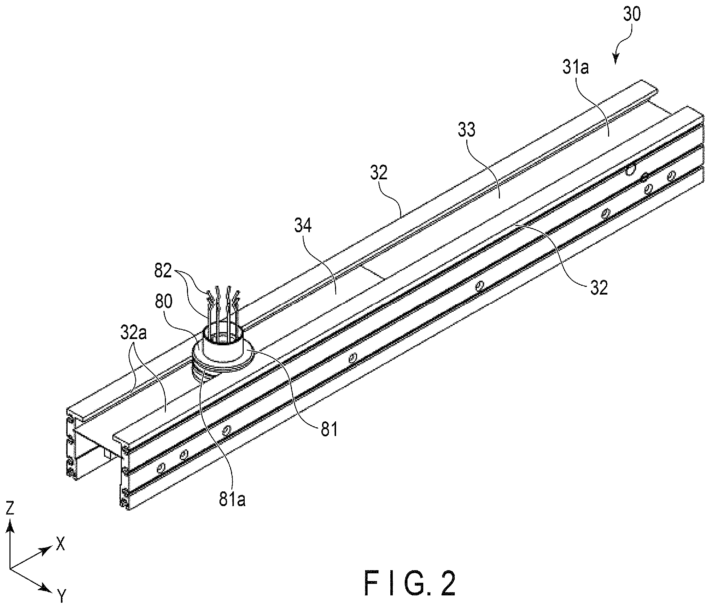

The cover 34 is disposed over the entire length in the first direction between the guide rails 32. In one example, the cover 34 is a band-shaped or plate-shaped member made of a resin material and having a predetermined width with its length direction extending along the conveyance direction. The cover 34 is arranged outside the loop of the chain belt 36 and outside the conveyor magnets 35 provided at the brackets on the outbound path. The cover 34 is arranged to face the bottom surface of the specimen holder 80 and forms a placement surface on the front side where the specimen holder 80 is to be placed. Note that, in FIG. 2, etc., the chain belt 36 and the cover 34 disposed on the backside are partially omitted. For the cover 34, for example, a thin plate (0.5 mm) of SUS304 is used. In one example, the holder 80 is conveyed with its bottom surface not in contact with the cover 34.

The conveyor magnets 35 are multiple permanent magnets provided in parallel arrangement over the chain belt 36. In one example, the multiple conveyor magnets 35 are fixed to the surface of the chain belt 36 via the respective fixation plates 36d mounted at predetermined intervals. The pitches between the conveyor magnets 35 may be set as appropriate according to processing conditions. For example, the pitches of the magnets 35 over the chain belt 36 may be aligned with the distance in the conveyance direction of the specimen holders 80 so as to allow the specimen holders 80 to be placed and conveyed without gaps, which can contribute to the capability of conveying many specimen holders 80. In one example, the arrangement of the conveyor magnets 35 in the conveyance direction adopts a pitch smaller than twice the holder width W.

The magnetic orientation of the conveyor magnet 35 is set to provide a state where the conveyor magnet 35 and the holder magnet 83 at the specimen holder 80 mutually attract each other, and for this purpose, the north pole and the south pole of the respective magnets are arranged to face each other. In other words, a uniform polarity should be adopted on each of the specimen holder side and the conveyance belt side.

For example, the holder magnets 83 and the conveyor magnets 35 are formed of neodymium.

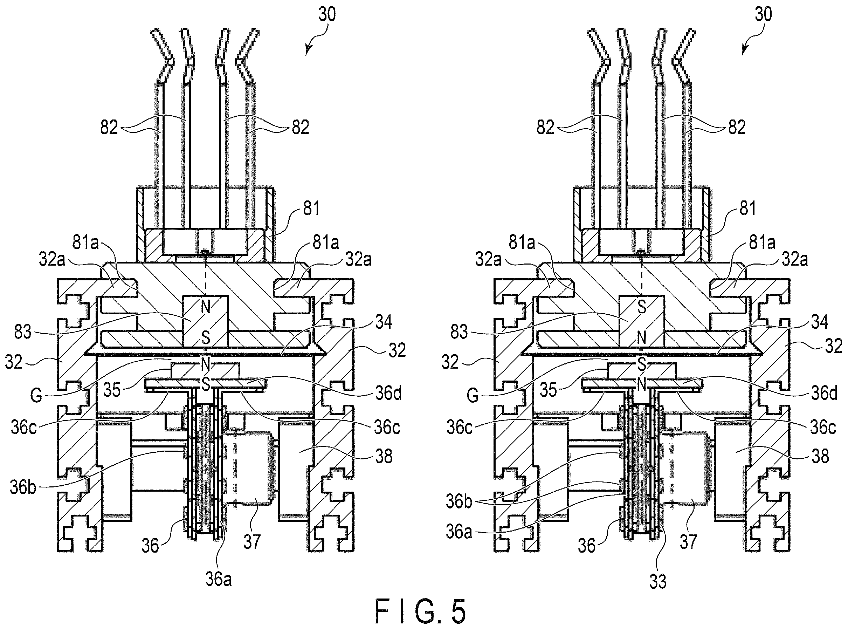

In one example, in instances where the south pole of the holder magnet 83 faces downward as shown in the left part of FIG. 5, the conveyor magnet 35 is arranged so that its north pole faces upward. On the other hand, in instances where the north pole of the holder magnet 83 faces downward as shown in the right part of FIG. 5, the conveyor magnet 35 is arranged so that its south pole faces upward. The pair of magnets 35 and 83 arranged in such a manner produces an attractive force required to move the specimen holder 80 in the conveyance direction.

The advancing roller 37 is provided inside the loop of the chain belt 36 and supports the chain belt 36. The advancing roller 37 is driven by the drive source 38 such as a motor, so as to rotate and advance the chain belt 36 in a predetermined advancing direction.

In each of the conveyor mechanisms 30, the advancing movement of the chain belt 36 conveys each specimen holder 80 holding the specimen container 70. Here, the projections 32a of the guide rails 32 engage with the level difference 81a of the specimen holder 80 so that the conveyance direction and the position of the specimen holder 80 are regulated.

The stop arm 90 is disposed at, for example, a predetermined location along the conveyance path 31a. The stop arm 90 is formed to be capable of transitioning between a regulating position where it enters the conveyance path 31a to interfere with the holder 80 or the specimen container 70 being conveyed, and a retracting position where it clears off from the conveyance path 31a. The stop arm 90 is brought into the regulating position at a predetermined timing under the control of the controller 100 so that it contacts the holder 80 or the specimen container 70 to regulate the position thereof and stop it.

The specimen holder 80 holding the specimen container 70 is supported in an upright state between the pair of guide rails 32, and is conveyed according to the movement of the chain belt 36.

The processing member 20 is a processing device for carrying out various processes for the specimen containers, and its examples include any one or more of a transfer device, a sampling and dispensing device, a lid opening and closing device, an imaging device, a sorting device, and so on.

The conveyor 10 configured as above thus moves the multiple specimen holders 80 holding the respective specimen containers 70 to the intended conveyance destinations according to the specimen information by advancing the chain belt 36 under the cover 34 arranged below the specimen holders 80 by the control of the controller 100.

The controller 100 includes a processor or processors for controlling operations of respective components based on various datasets and calculation and determination results. More specifically, the controller 100 controls the conveyance operations of the conveyor mechanisms 30 and each mechanism in the processing member 20 at predetermined timings so as to carry out the conveyance or other processes for the specimen containers.

For example, the controller 100 controls the advancing rollers 37 to operate the multiple conveyor mechanisms 30. The specimen holders 80 are pulled and conveyed by the magnets under the advancing movement of the chain belt 36.

Then, for example, the specimen holder 80 or the specimen container 70 upon arrival at the processing point is stopped by the position regulating member such as the stop arm 90. Here, the specimen holder 80 is stopped against the magnetic force, which causes the holder magnet 83 and the conveyor magnet 35 to be set to different positions. The chain belt 36 here may be kept operating.

In the conveyor 10 configured as above, the magnets 35 are also provided at regular intervals over the advancing member such as the chain belt 36 of the conveyor mechanism 30 to convey the specimen holders 80, and accordingly, the attractive force produced by the two magnets 83 and 35 enables the conveyance in the strongly pulled state. Thus, the specimen holders 80 can be conveyed at high speed and in a contactless manner along with the advancement of the conveyor mechanism 30. That is, the mutual attraction between the conveyor magnet 35 and the holder magnet 83 provided at the specimen holder 80 can enhance the attractive force and realize the movement of the specimen holders 80 even at increased conveyance speed.

Also, the conveyor magnet 35 can be placed in a face-to-face arrangement with a predetermined clearance secured under the cover 34 (on the backside of the cover 34), meaning that contactless conveyance is enabled, and consequently, occurrence of wearing can be prevented.

As a comparative example, a configuration will be assumed where a magnet is provided on only the holder side and a metal member is disposed on the belt side. In such a configuration, the specimen holder is conveyed at a position slightly delayed from the position of the metal member on the conveyance belt in the advancing direction. In contrast, according to the present embodiment, the ability to track is improved by utilizing the mutual attraction due to the additional arrangement of the magnet over the conveyance belt, and this can realize improved positional accuracy on the moving conveyor with a capability of delivering the conveyance objects to intended positions.

The magnets over the conveyance belt may be arranged at regular intervals according to sizes of the specimen holders so that high speed conveyance can be realized even with a number of the specimen holders serially and tightly arranged.

As an example, a case will be assumed where the leading one of the specimen holders 80 moving in the serially and tightly arranged state is externally stopped by the interference with the stop arm 90, so as to conduct work on the conveyor. In this case, the subsequent specimen holders 80 are sequentially stopped as well, without causing a contact between their holder bottom surfaces and the conveyor surface due to the effect of their own magnets 35 having a magnetic force to alternately attract metal members 39 (magnetic material) and the magnets over the conveyance belt.

Note that, at the time of stopping each holder 80, the chain belt 36 may be kept advancing instead of being stopped so that the processing speed can be maintained without affecting the processing of the holder 80 in the upstream conveyance part. Therefore, it is preferred that the conveyance belt be prevented from being stopped as much as possible during the conveyance operations.

Note that the present invention is not limited to the foregoing embodiments as they are. For practical implementation, the invention may be embodied with modifications of its components without departing from the gist of the invention.

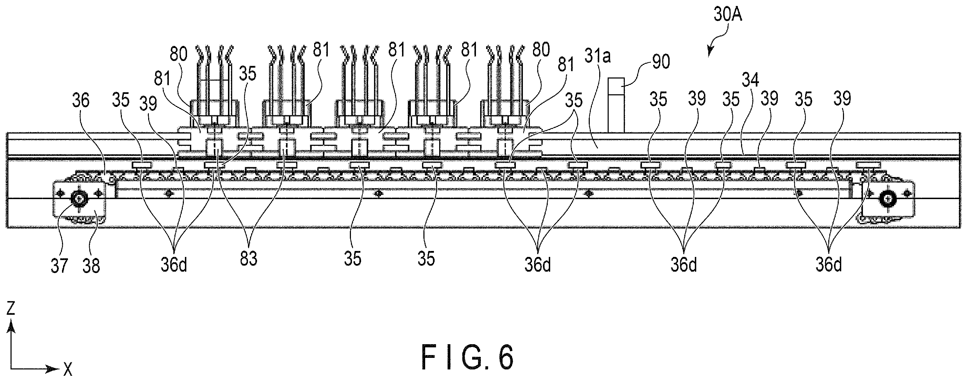

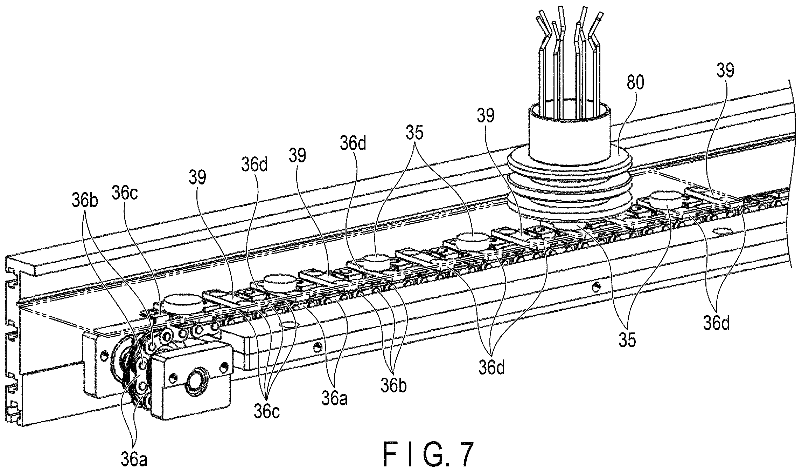

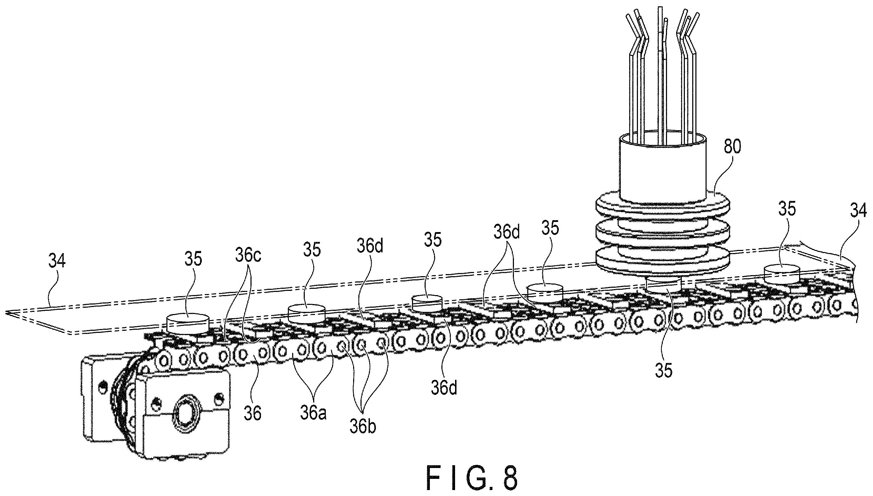

For example, as in a conveyor mechanism 30A shown in FIGS. 6 to 8 which may serve as another embodiment, it is possible to provide a metal member 39 which is a magnetic material between the magnets 35 arranged at regular intervals over the chain belt 36. For example, the space between the metal member 39 and the magnet 35 is smaller than the holder width W. In the conveyor mechanism 30A, the surface of the chain belt 36 is provided with conveyor magnets 35 with the magnetic material, i.e., the metal member 39, disposed between the neighboring magnets 35. In one example, the metal member 39 is formed in a rectangular plate shape having a dimension smaller than the width of the chain belt 36.

As one example, for this embodiment, the fixation plates 36d as in the foregoing first embodiment are arranged at a predetermined pitch that is 1/2 or less of the arrangement pitch for the holders 80. Then, the conveyor magnets 35 are provided on half of such fixation plates 36d that are arranged on every other one of the fixation plates 36d. The remaining half of the fixation plates 36d are constituted by the metal members 39.

According to this embodiment, the magnetic properties increase in the order of the material of the chain belt 36 < the metal member 39 < the magnet 35. Supposing that the chain belt 36 in the conveyor mechanism 30A is driven to advance in the conveyance direction, the metal members 39 are moved concurrently with the magnets 35. Thus, for example, even if only the leading one of the specimen holders 80 moving in the serially and tightly arranged state is externally stopped so as to conduct various processing operations on the chain belt 36, the subsequent specimen holders 80 can be sequentially stopped as well while maintaining a contactless state due to the effect of their own magnets 83 having a magnetic force to alternately attract the metal members 39 (magnetic material) and the magnets 35 over the chain belt 36. Then, upon releasing the means for externally stopping the leading specimen holder, the conveyance movement can be resumed with the magnetic force of the magnets 35 over the chain belt 36.

In one example, the metal members 39 contain iron having a magnetic property. For example, the metal members 39 may be arranged at a pitch corresponding to half of the pitch between the magnets. In this way, a braking effect can be exerted even under the magnet-to-magnet repeated attractions during the ongoing movement of the belt member while the holders have been stopped. Consequently, shaking of the specimen can be suppressed. The relationship in terms of the attractive force created with the holder magnet is set to: the metal member 39 < the belt magnet.

According to this embodiment, the magnetic effect that can be received by the magnet 83 on the holder side is improved due to the presence of the metal member 39 between the magnets 35. More specifically, assuming that the metal members 39 are absent, each holder magnet 83 receives the magnetic force from only the locations of the conveyor magnets 35, and the interval between receipt of the magnetic force and another receipt of the magnetic force is increased. As such, the magnetic force is disrupted at the locations without the magnets 35. For example, at the time of externally stopping the specimen holder 80 on the chain belt 36 for conducting conveyance processes, the ongoing advancement of the chain belt 36 causes the conveyor magnets 35 to sequentially move in the conveyance direction. This would create a state where the magnetic force is completely absent, and can cause the specimen holder 80 to be pulled by the magnet 35 coming from behind and temporarily move back in the direction opposite the conveyance direction. In contrast, according to the present embodiment where the metal member 39 is provided between the magnets 35, a weak magnetic force can be produced between the holder magnet 83 and the metal member 39, and accordingly, the holder magnet 83 alternately undergoes a strong magnetic force with the conveyor magnet 35 and a weak magnetic force with the metal member 39. Therefore, the occurrence of such temporal backward movement due to the pulling by the magnet 35 coming from behind can be suppressed.

For example, the specimen containers 70 as sorting subjects may be the same type or different types.

The foregoing embodiments have assumed an exemplary configuration in which the chain belt 36 is kept advancing without being stopped at the time of stopping the holder 80 by the stop arm 90, but this is not a limitation. For example, the advancing movement of the chain belt 36 may be stopped, so as to stop the holder 80, according to the processing contents and conditions.

Also, concrete configurations that may be employed in the foregoing embodiments are not limited to those described above. For example, while the foregoing embodiments have assumed an exemplary configuration in which the conveyor mechanisms 30 are provided with the respective advancing rollers 37 each serving as a belt advancing mechanism, it is possible to adopt a configuration in which multiple chain belts 36 are driven by a common belt advancing mechanism. Also, the conveyance directions of the multiple rows of the conveyor mechanisms may be set in any way. For example, conveyor mechanisms 30 using, for example, opposite directions may be arranged, or the structures with curved portions or ascending and descending portions may be adopted.

In addition to the above, the components, etc., discussed for the foregoing embodiments may be suitably omitted, or changes may be suitably made to the shapes, structures, materials, etc. of the components, etc. Various inventions may also be formed from appropriate combinations of the components discussed for the foregoing embodiments.

## Claims

1. A conveyor configured so that a plurality of holders are arranged, the holders each being configured to hold a specimen container in an upright state and comprising a first magnet,
the conveyor comprising an advancing member comprising a second magnet and configured to move along a conveyance path, the first magnet and the second magnet being adapted to produce an attractive force therebetween.

2. The conveyor according to claim 1, comprising a driver configured to drive the advancing member, wherein
the holders each comprise a cylinder part having an accommodating hole for accommodating a bottom portion of the specimen container,
the first magnet is provided at a bottom portion of the cylinder part, and
the second magnet is arranged plurally along the conveyance path in the advancing member.

3. The conveyor according to claim 1, comprising a cover arranged between the advancing member and the holders.

4. The conveyor according to claim 1, wherein the second magnet is arranged plurally along the conveyance path in the advancing member, and the advancing member comprises a metal member arranged between the plurality of second magnets.

5. The conveyor according to claim 1, wherein
the advancing member comprises a belt member or a chain member,
the conveyor comprising guide rails provided along the conveyance path and on both sides of the advancing member, the guide rails being configured to engage with an outer peripheral portion of each of the holders and to support the holders with a predetermined clearance between the holders and the advancing member.
